# FASCICULE DE BREVET EUROPEEN

(11) **EP 4 563 470 B1**
(45) Date de publication et mention de la délivrance du brevet: **15.04.2026**
(21) Numéro de dépôt: 24202955.1
(22) Date de dépôt: 26.09.2024
(51) Int. Cl.: B64C 27/06, B64D 27/33, B64D 31/09, B64D 35/022, G09B 9/08, G09B 9/46

(54) **PROCÉDÉ D'ENTRAÎNEMENT À LA PANNE MOTEUR SUR UN GIRAVION À MOTORISATION HYBRIDE**
VERFAHREN ZUM ANTRIEB EINES HYBRIDMOTORISIERTEN DREHFLÜGELFLUGZEUGS MIT MOTORAUSFALL
METHOD FOR TRAINING THE FAILURE OF AN ENGINE ON A HYBRID MOTOR-DRIVEN ROTORCRAFT

(30) Priorité: 30.11.2023 FR 2313361
(43) Date de publication de la demande: 04.06.2025
(73) Titulaire: Airbus Helicopters, 13725 Marignane Cedex (FR)
(72) Inventeur: DUMUR, Guillaume, 13300 Salon de Provence (FR)
(74) Mandataire: GPI Brevets

(56) Documents cités:
- US-A1- 2020 346 744
- US-A1- 2023 011 896
- US-B2- 11 560 237

## Description

La présente invention concerne un procédé d'entraînement à la panne moteur sur un giravion à motorisation hybride, et un aéronef appliquant ce procédé.

Un giravion comporte usuellement une installation motrice pour mettre en mouvement au moins un rotor participant à sa sustentation. Un tel rotor est dénommé « rotor de sustentation » par commodité par la suite. Par exemple, un hélicoptère peut comprendre un rotor de sustentation et un rotor arrière qui participe au contrôle du mouvement en lacet de l'aéronef.

L'installation motrice peut comporter au moins un moteur à combustion. L'expression « moteur à combustion » désigne, par commodité, un moteur nécessitant la combustion d'un carburant pour produire une énergie mécanique, tel qu'un turbomoteur ou encore un moteur à pistons par exemple. L'expression « moteur à combustion » est à opposer à l'expression « moteur électrique » qualifiant les moteurs transformant une énergie électrique en une énergie mécanique.

En cas de panne d'un moteur à combustion sur un giravion monomoteur usuel, le rotor de sustentation n'est plus entraîné par ce moteur à combustion. La rotation du rotor de sustentation subit alors une décélération importante. L'aéronef doit alors entrer, sous les commandes de son pilote, dans une phase de vol en autorotation pour limiter la baisse de la vitesse de rotation du rotor de sustentation.

Cette entrée en phase de vol en autorotation doit être faite dans un délai très court, de l'ordre de 1 à 2 secondes après l'apparition de la panne du moteur à combustion pour conserver une vitesse de rotation du rotor de sustentation acceptable. Une phase de vol en autorotation correspond à une phase de vol particulière dans laquelle l'aéronef vole en descente sans puissance motrice.

Sur un hélicoptère du type décrit précédemment, le rotor de sustentation est alors entraîné en rotation par le vent relatif. Le rotor de sustentation reste le siège d'une portance stabilisée suffisante pour freiner et contrôler la descente de l'aéronef jusqu'à l'atterrissage. Pour appliquer cette procédure particulière de pilotage, le pilote doit entrer dans la phase d'autorotation en baissant rapidement le pas collectif des pales du rotor de sustentation pour maintenir une vitesse de rotation du rotor de sustentation dans des limites admissibles.

Cette procédure particulière exige une grande précision et un entraînement adapté et récurrent de la part du pilote de l'aéronef. Un tel entraînement s'avère de fait délicat à mettre en œuvre. Lors d'un tel entraînement, un pilote place le moteur à combustion dans un régime de ralenti pour simuler la panne moteur, ledit moteur étant dès lors piloté à une puissance minimale non suffisante pour apporter de la puissance au rotor. Le pilote manœuvre, par exemple, une poignée de gaz jusqu'à une butée mécanique de ralenti, ou commande un régime de ralenti via un interrupteur relié au boîtier de contrôle du moteur.

Des solutions ont été envisagées pour assister le pilote d'un giravion monomoteur par l'apport d'une énergie complémentaire pour la réalisation d'une phase de vol en autorotation.

Ainsi, le document FR 2994687 décrit un aéronef ayant une boîte de transmission de puissance mettant en mouvement au moins un rotor principal de sustentation. Selon ce document, on surveille pendant un vol le fonctionnement du moteur à combustion mettant en mouvement la boîte de transmission de puissance afin de détecter une panne. Lorsqu'une panne du moteur à combustion est détectée, un moteur électrique est commandé pour fournir une puissance auxiliaire au rotor principal de sustentation. Cette fourniture de puissance auxiliaire permet alors de réduire la décélération du rotor principal de sustentation ce qui offre au pilote une plus grande souplesse dans la manœuvre. L'entrée en phase de vol en autorotation de l'aéronef est alors plus rapide et aisée pour le pilote.

Le document FR 3 090 576 décrit aussi un procédé d'assistance d'un pilote d'un aéronef monomoteur à voilure tournante lors d'une phase de vol en autorotation, en sollicitant un moteur électrique.

L'utilisation d'un moteur électrique auxiliaire pour faciliter le travail d'un pilote au moment d'une panne moteur au sein d'un giravion monomoteur est intéressante. Toutefois, l'entraînement d'un pilote à cette phase d'autorotation peut alors être complexifié. En effet, seuls les aéronefs équipés d'un tel moteur électrique permettent de fait d'entraîner un pilote à la panne du moteur à combustion sur un tel type d'aéronef.

En outre, les sources d'énergie électrique d'un aéronef de ce type ne permettent pas de réaliser de nombreux entraînements successifs lors d'un même vol. Le pilote doit retourner à sa base pour recharger ou changer des batteries électriques afin de faire plusieurs entraînements.

Les documents relatifs à l'entraînement à la panne d'un moteur à combustion sur un aéronef comprenant plusieurs moteurs à combustion fonctionnant différemment sont éloignés de cette problématique.

Par exemple, le document US 20230019379 décrit l'entraînement à la panne d'un moteur à combustion sur un aéronef doté de plusieurs moteurs à combustion différents. L'aéronef comporte un moteur principal et un groupe motopropulseur supplémentaire moins puissant. Durant un entraînement, le groupe motopropulseur supplémentaire fournit une première puissance inférieure à la puissance d'urgence à développer en cas de panne réelle du moteur principal, et le moteur principal est ralenti pour que la somme de la puissance développée par le moteur principal et de la puissance développée par le groupe motopropulseur supplémentaire soit égale à la puissance d'urgence.

La demande de Brevet CN 115762292 décrit un système de contrôle des moteurs d'un hélicoptère destiné à la formation de pilotes à l'autorotation. Les documents US 2023011896 et US 2020346744 ont également été cités.

La présente invention a alors pour objet de proposer un procédé permettant d'entraîner un pilote à une panne moteur pouvant survenir sur un giravion monomoteur ayant une voilure tournante, cet aéronef monomoteur ayant un moteur électrique d'assistance pouvant fournir un surcroît de puissance à la voilure tournante lors de la phase d'autorotation.

L'invention vise ainsi un procédé de simulation d'une phase d'autorotation pouvant survenir sur un giravion simulé. Le giravion simulé comporte un unique moteur à combustion simulé pour mettre en rotation un rotor de sustentation simulé hors cas de panne et un moteur électrique simulé pour mettre en rotation ledit rotor de sustentation simulé lors de ladite phase d'autorotation.

Le terme « simulé » est associé à des objets dont on veut simuler le fonctionnement. Le procédé vise donc à simuler, avec divers types de giravions, le fonctionnement d'un giravion dit « giravion simulé » ayant un unique moteur à combustion pour mettre en rotation un rotor de sustentation hors cas de panne, et un moteur électrique pour fournir automatiquement un couple moteur au rotor de sustentation lors d'une phase d'autorotation si besoin.

A l'inverse, le terme « entraînement » est associé à des objets d'un giravion permettant de simuler un tel comportement et sur lequel le présent procédé est appliqué. Le giravion d'entraînement peut être différent ou identique au giravion simulé.

Ce procédé comporte alors une phase d'entraînement réalisée avec un giravion d'entraînement, le giravion d'entraînement comportant un unique moteur à combustion d'entraînement pour mettre en rotation un rotor de sustentation d'entraînement, le moteur à combustion d'entraînement étant régulé par un régulateur d'un système de pilotage en maintenant un paramètre de couple du giravion d'entraînement inférieur ou égal à une limite de régulation, la phase d'entraînement comprenant :
- activation de la phase d'entraînement par la manœuvre d'une interface homme-machine d'entrée du système de pilotage,
- en réponse à ladite activation, affectation par le régulateur à la limite de régulation d'une valeur d'entraînement mémorisée, et régulation du moteur à combustion d'entraînement par le régulateur en maintenant le paramètre de couple du giravion d'entraînement inférieur ou égal à la limite de régulation, ladite valeur d'entraînement étant inférieure à une valeur nominale affectée à la limite de régulation avant ladite activation, pour que le moteur à combustion d'entraînement développe une puissance égale à une puissance de référence développée par le moteur électrique simulé lors d'une phase d'autorotation au sein du giravion simulé.

Le terme « affectation » signifie que le paramètre concerné devient égal à la valeur concernée.

Par suite, ce procédé ne fait pas intervenir un moteur électrique pour simuler le comportement souhaité. Selon ce procédé, lors de la phase d'entrainement le régulateur baisse la valeur de la limite de régulation du moteur à combustion d'entraînement en lui affectant la valeur d'entraînement prédéterminée à la place de la valeur nominale.

Dès lors, la valeur d'entraînement étant très inférieure à la valeur nominale, par exemple afin que le moteur à combustion développe une puissance de l'ordre de 20% de la puissance développée avant la phase d'entraînement, le paramètre de couple devient supérieur à la limite de régulation. Par conséquent, le régulateur ferme le doseur alimentant en carburant le moteur à combustion d'entraînement. La puissance développée par le moteur à combustion d'entraînement va alors décroitre. La valeur d'entraînement est définie pour que le moteur à combustion d'entraînement fournisse une puissance sensiblement égale à la puissance de référence du moteur électrique simulé. Cette puissance de référence peut être une puissance maximale par exemple. L'expression « puissance égale à une puissance de référence » signifie que le moteur à combustion d'entraînement fournit une puissance égale à la puissance de référence du moteur électrique simulé à une marge de sécurité près, par exemple plus ou moins 10 pourcents.

Par suite, le giravion d'entraînement a de fait un comportement similaire au giravion simulé lorsque le moteur à combustion simulé tombe en panne et que le moteur électrique simulé prend le relais.

Ce procédé permet de simuler notamment l'initiation d'une phase d'autorotation sur un tel giravion simulé, sans avoir recours à un moteur électrique, voire sur un autre type de giravion. Ainsi, l'entraînement peut être réalisé de multiples fois successivement lors d'une même séance sans solliciter un moteur électrique, étonnement aussi bien avec un giravion classique dépourvu d'un tel moteur électrique qu'avec un giravion comprenant une assistance à l'autorotation ayant un tel moteur électrique.

Le procédé peut de plus comporter une ou plusieurs des caractéristiques qui suivent, prises seules ou en combinaison.

Selon une possibilité, le paramètre de couple peut être une puissance motrice ou un couple moteur transmis à un élément du giravion d'entraînement.

Par exemple, le paramètre de couple est mesuré sur un arbre du moteur à combustion. Ainsi, il est possible de déterminer, par calculs ou essais ou simulations par exemple, la valeur que doit avoir le paramètre de couple pour fournir au rotor de sustentation d'entraînement sensiblement la même puissance qu'en utilisant le moteur électrique simulé.

Selon une possibilité compatible avec les précédentes, le giravion d'entraînement peut comporter un moteur électrique d'entraînement apte à mettre en rotation ledit rotor de sustentation d'entraînement et non utilisé durant la phase d'entraînement ou peut comporter uniquement le moteur à combustion d'entraînement pour mettre en mouvement le rotor de sustentation d'entraînement.

Le giravion d'entraînement peut être identique au giravion simulé. Dans ce cas, le moteur électrique n'a pas besoin d'être utilisé pour être simulé, ce qui permet de réaliser plusieurs fois la phase d'entrainement lors d'un même vol, sans devoir recharger des batteries électriques de l'aéronef.

Alternativement, le giravion d'entraînement peut être un giravion classique capable étonnamment de simuler une entrée dans une phase d'autorotation au sein du giravion simulé.

Selon une possibilité compatible avec les précédentes, la régulation du moteur à combustion d'entraînement peut comporter une régulation du moteur à combustion d'entraînement en appliquant une loi de régulation dédiée à la phase d'entraînement, et une inhibition de cette loi de régulation tant que le paramètre de couple est supérieur ou égal à la valeur d'entraînement.

Le régulateur est configuré pour appliquer une loi de commande afin de déterminer un ordre à transmettre au doseur de carburant. Hors phase d'entraînement, la loi de commande prend la forme d'une loi nominale usuelle. Lors de la phase d'entraînement, la loi nominale est remplacée par la loi de régulation dédiée. Cette loi de régulation dédiée peut être du type de la loi de régulation du moteur électrique simulé. Par exemple, le régulateur applique la loi de régulation décrite dans le document FR 2 994 687 ou le document FR 3 090576.

Selon une possibilité compatible avec les précédentes, le giravion d'entraînement peut comprendre un instrument du système de pilotage affichant une limite de fonctionnement déterminée par une loi d'affichage en fonction de la valeur nominale ; la phase d'entraînement comportant un remplacement de la valeur nominale par la valeur d'entraînement pour déterminer la limite de fonctionnement.

A titre illustratif, le giravion d'entraînement comporte un instrument de première limitation aussi dénommé « First Limitation Instrument » en langue Anglaise. Cet instrument considère plusieurs paramètres de surveillance et leurs limites. En ce qui concerne le paramètre de couple, cet instrument prend alors en considération, durant la phase d'entraînement, la valeur d'entraînement au lieu de la valeur nominale.

Selon une possibilité compatible avec les précédentes, ladite régulation dudit moteur à combustion d'entraînement peut comporter un maintien d'une puissance courante développée par le moteur à combustion d'entraînement supérieure à une puissance atteinte lors d'un régime de ralenti.

Le moteur à combustion d'entraînement n'est ainsi pas mis au ralenti pour simuler le fonctionnement d'un moteur électrique d'assistance, par exemple en développant une puissance non nulle suffisante pour entraîner le rotor en rotation, contrairement à la procédure décrite précédemment appliquée sur un giravion monomoteur usuel.

Selon une possibilité compatible avec les précédentes, la phase d'entraînement peut comporter un affichage d'au moins une information suivante : une indication d'une action à réaliser sur un pas collectif de pales du rotor de sustentation d'entraînement ; une vitesse de rotation courante dudit rotor de sustentation d'entraînement ; un objectif de vitesse de rotation dudit rotor de sustentation d'entraînement ; d'un état de charge simulé, en fonction d'une durée de fonctionnement du moteur à combustion d'entraînement et de valeurs successives du paramètre de couple pendant cette durée de fonctionnement durant la phase d'entraînement, d'une batterie électrique simulée alimentant électriquement le moteur électrique simulé ; un symbole illustrant la mise en œuvre de la phase d'entraînement.

Selon une possibilité compatible avec les précédentes, le procédé peut comprendre une sortie de la phase d'entraînement, ladite limite de régulation étant égale à la valeur nominale à l'issue de ladite sortie.

La sortie représente une phase de transition permettant de replacer le giravion dans les conditions normales présentes avant la phase d'entrainement.

Selon une possibilité compatible avec les précédentes, le procédé peut comporter une manœuvre d'une interface homme-machine de sortie du système de pilotage, ladite sortie étant réalisée en réponse à ladite manœuvre de l'interface homme-machine de sortie.

Un pilote peut ainsi sortir manuellement de la phase d'entraînement.

Selon une possibilité compatible avec les précédentes, ladite sortie peut être engagée automatiquement :
- lorsqu'une vitesse de rotation du rotor de sustentation d'entraînement est inférieure à un premier seuil de vitesse et conjointement une hauteur du giravion d'entraînement est supérieure à un seuil de hauteur, ou
- lorsque la vitesse de rotation du rotor de sustentation d'entraînement est inférieure ou égale à un deuxième seuil de vitesse et conjointement la hauteur du giravion d'entraînement est inférieure ou égale au seuil de hauteur, le premier seuil de vitesse étant supérieur au deuxième seuil de vitesse.

Par exemple, le premier seuil de vitesse peut être un seuil prédéterminé. Le premier seuil de vitesse peut aussi être inscrit dans le manuel de vol de l'aéronef pour cette procédure.

Par exemple, le seuil de hauteur peut être un seuil prédéterminé. Par exemple, le seuil de hauteur est établi pour être supérieur à la hauteur d'un point haut du diagramme hauteur vitesse de l'aéronef. Le diagramme hauteur vitesse est un graphique illustrant les zones de vol sûres et dangereuses pour un aéronef spécifique, et par exemple un hélicoptère. Ledit point haut est le point le plus haut associé à une zone à éviter.

Par exemple, le deuxième seuil de vitesse peut être de l'ordre de 75% d'une vitesse nominale prédéterminée.

Dès lors, le système de régulation peut automatiquement sortir de la phase d'entraînement en fonction de la vitesse de rotation du rotor de sustentation d'entraînement et de la hauteur du giravion d'entraînement.

En effet, lors de l'entrée en phase de vol en autorotation, si la vitesse de rotation du rotor de sustentation d'entraînement devient inférieure au premier seuil de vitesse, le pilote n'a pas réussi à entrer dans cette phase d'autorotation de la manière requise. La phase d'entraînement doit donc être arrêtée pour que le moteur à combustion d'entraînement fournisse une puissance suffisante pour entraîner en rotation le rotor de sustentation d'entraînement en sécurité. L'entrée dans la phase d'autorotation se déroule généralement à une hauteur par rapport au sol supérieure au seuil de hauteur.

A contrario, juste avant l'atterrissage, et donc proche du sol, le pilote doit augmenter le pas collectif des pales du rotor de sustentation d'entraînement afin de réduire la vitesse de descente du giravion d'entraînement. Cette action a également pour effet de réduire significativement la vitesse de rotation du rotor de sustentation d'entraînement. Cependant, cette vitesse de rotation du rotor de sustentation d'entraînement doit rester supérieure au second seuil de vitesse pour que le rotor de sustentation d'entraînement fournisse une portance suffisante. Cette phase d'atterrissage se déroule proche du sol, la hauteur du giravion d'entraînement par rapport au sol étant inférieure ou égal au seuil de hauteur.

Le mode automatique et le mode manuel de sortie peuvent être disponibles sur un même giravion.

Selon une possibilité compatible avec les précédentes, ladite sortie peut comprendre une affectation à la limite de régulation d'une valeur qui augmente selon une loi de transition prédéterminée de la valeur d'entraînement à la valeur nominale durant une phase de transition.

Cette caractéristique permet d'augmenter progressivement la limite de régulation du moteur à combustion d'entraînement, évitant ainsi un changement trop brutal de cette limite de régulation afin de préserver la chaîne de transmission mécanique reliant le moteur à combustion d'entraînement au rotor de sustentation d'entraînement et/ou de ne pas perturber le pilote par un potentiel à-coup en lacet.

La présente invention concerne aussi un giravion mettant en œuvre ce procédé. La présente invention concerne alors un giravion d'entraînement pour entraîner un pilote à entrer dans une phase en autorotation suite à une panne moteur au sein d'un giravion simulé, le giravion d'entraînement comportant un unique moteur à combustion d'entraînement pour mettre en rotation un rotor de sustentation d'entraînement. Ce giravion d'entraînement comporte un système de pilotage configuré pour mettre en œuvre ce procédé. L'invention et ses avantages apparaîtront avec plus de détails dans le cadre de la description qui suit avec des exemples donnés à titre illustratif en référence aux figures annexées qui représentent :
la figure 1, une vue schématiquement présentant un giravion d'entraînement apte à simuler le fonctionnement en autorotation d'un giravion simulé, et
la figure 2, une vue schématique explicitant le procédé de simulation de l'invention.

Les éléments présents dans plusieurs figures distinctes sont affectés d'une seule et même référence.

L'invention concerne un procédé de simulation, ainsi qu'un programme d'ordinateur et un giravion d'entraînement aptes à mettre en œuvre ce procédé.

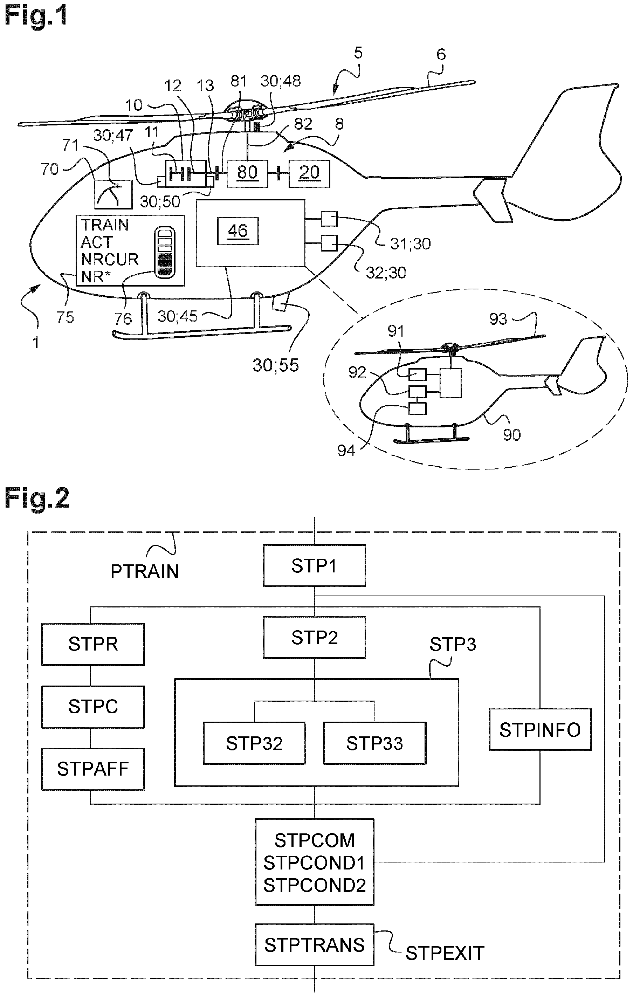

Selon la figure 1 un tel giravion d'entraînement 1 comporte au moins un rotor de sustentation, dit rotor de sustentation d'entraînement 5. Ce rotor de sustentation d'entraînement 5 participe notamment à la sustentation du giravion d'entraînement 1. Par exemple, le giravion d'entraînement 1 est un hélicoptère.

Le rotor de sustentation d'entraînement 5 comporte au moins une pale 6. De plus, le giravion d'entraînement 1 peut comprendre un système de modification de pas pour modifier sur commande le pas de la ou des pales 6, en particulier une composante de pas collectif par exemple. Un tel système de modification de pas peut être d'un type usuel et n'est pas détaillé pour ne pas alourdir inutilement la figure 1. Un tel système de modification de pas est connu de l'homme du métier et peut comporter, par exemple, un ensemble de plateaux cycliques relié à chaque pale 6 par une bielle de pas.

De plus, le giravion d'entraînement 1 comporte un unique moteur à combustion, dit moteur à combustion d'entraînement 10, pour mettre en rotation le rotor de sustentation d'entraînement 5. Le moteur à combustion d'entraînement 10 comporte un arbre de puissance 13.

Selon l'exemple illustré, le moteur à combustion d'entraînement 10 peut comporter un générateur de gaz 11 suivi d'une turbine de puissance 12 reliée cinématiquement à l'arbre de puissance 13. Alternativement, le moteur à combustion d'entraînement 10 peut comporter un moteur à pistons.

Quelle que soit la nature du moteur à combustion d'entraînement 10, l'arbre de puissance 13 peut être connecté à une chaîne de transmission de puissance 8 qui est connectée au rotor de sustentation d'entraînement 5. Par exemple, la chaine de transmission de puissance 8 peut notamment comporter une boîte de transmission de puissance principale 80. La boîte de transmission de puissance principale 80 peut comprendre un premier arbre d'entrée 81 connecté directement ou indirectement à l'arbre de puissance 13, et/ou un mât rotor 82 connecté directement ou indirectement au rotor de sustentation d'entraînement 5.

Eventuellement, le giravion d'entraînement 1 peut comprendre un moteur électrique d'entraînement 20 pouvant participer ponctuellement à la mise en rotation du rotor de sustentation d'entraînement 5. Un tel moteur électrique d'entraînement 20 peut être, selon l'exemple illustré, connecté à un arbre d'entrée de la boîte de transmission de puissance 80. Un tel moteur électrique d'entraînement 20 est optionnel. Le moteur électrique d'entraînement 20 peut être une machine électrique apte à fonctionner en modes moteur et générateur électrique ou peut fonctionner uniquement en mode moteur.

Par ailleurs, le giravion d'entraînement 1 est équipé d'un système de pilotage 30 configuré pour permettre de simuler une phase d'autorotation qui se déroulerait sur un giravion simulé 90. Le giravion d'entraînement 1 permet donc de simuler le comportement d'un giravion particulier dit « giravion simulé 90 » et représenté en petit dans une bulle en traits discontinus pour être illustré. Ce giravion simulé 90, dont on veut simuler le comportement avec le giravion d'entraînement 1, comporte un unique moteur à combustion simulé 91 pour mettre en rotation un rotor de sustentation simulé 93 hors cas de panne et un moteur électrique simulé 92 pour mettre en rotation ledit rotor de sustentation simulé 93 lors de ladite phase d'autorotation. Les performances du giravion simulé 90 sont de fait connues.

Le système de pilotage 30 peut notamment comprendre un programme d'ordinateur 46 comportant des instructions qui, lorsque le programme d'ordinateur 46 est exécuté, conduisent le système de pilotage 30 à mettre en œuvre le procédé de simulation décrit par la suite.

En particulier, le système de pilotage 30 comprend un régulateur 45. Le régulateur 45 peut comprendre un ou plusieurs calculateurs dédiés ou non à cette application et apte à appliquer ledit programme d'ordinateur 46. Le terme « calculateur » désigne une unité pouvant comprendre par exemple au moins un processeur et au moins une mémoire, au moins un circuit intégré, au moins un système programmable, au moins un circuit logique, ces exemples ne limitant pas la portée donnée au terme « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur...Par exemple, le régulateur 45 comporte un calculateur connu sous l'expression « unité de contrôle moteur » ou encore « engine control unit » en langue anglaise.

Le régulateur 45 peut piloter un doseur 47 du système de pilotage 30. Le doseur 47 contrôle le débit de carburant qui alimente le moteur à combustion d'entraînement 10. A cet effet, le régulateur 45 applique des lois mémorisées afin de transmette un signal de commande au doseur 47 en fonction de données d'entrées fournies par des senseurs usuels. Par exemple, le régulateur 45 communique avec un senseur de vitesse 48 évaluant une vitesse de rotation courante NGCUR du rotor de sustentation d'entraînement 5 et/ou un senseur de couple 50 évaluant un couple moteur développé par le moteur à combustion d'entraînement 10, et/ou un senseur de hauteur 55 mesurant une hauteur du giravion d'entraînement 1 par rapport à une surface survolée. Ces senseurs du système de pilotage 30 sont d'un type usuel connus de l'homme du métier. Par exemple le senseur de hauteur comporte une radiosonde, le senseur de couple comporte un couplemètre, voire le senseur de vitesse comporte un senseur de position et un dérivateur.

Le régulateur 45 peut piloter le doseur 47 pour faire tendre la vitesse de rotation du rotor de sustentation d'entraînement 5 ou de l'arbre de puissance 13 vers une consigne de vitesse par exemple.

En complément, le régulateur 45 pilote le doseur 47 pour ne pas dépasser des limites de régulation préétablies du moteur à combustion d'entraînement 10 ou de la chaine de transmission de puissance 8. Le moteur à combustion d'entraînement 10 est ainsi régulé par le régulateur 45 pour qu'un paramètre de couple du giravion d'entraînement 1 soit inférieur ou égal à une limite de régulation. Le paramètre de couple est une puissance motrice ou un couple moteur au sein d'un élément du giravion d'entraînement 1, par exemple au niveau de l'arbre de puissance 13, du premier arbre d'entrée 81, du mât rotor 82 ou d'un rouage de la boîte de transmission de puissance 80.

Par ailleurs, le régulateur 45 peut communiquer avec un instrument 70. Un tel instrument 70 peut être configuré pour afficher une limite de fonctionnement 71 déterminée avec une loi d'affichage en fonction notamment de la limite de régulation, voire d'autres limites comme une limite de température ou de vitesse de rotation du moteur à combustion. Par exemple, cet instrument 70 est du type dénommé IPL ou encore Instrument de Première Limitation et affiche une marque par rapport à une limite de fonctionnement porteuse du paramètre surveillé le plus proche de sa limite.

Par ailleurs, le régulateur 45 peut communiquer avec un afficheur 75. Cet afficheur 75 peut comprendre un ou des écrans permettant d'afficher une ou plusieurs données décrites par la suite.

Enfin, le régulateur 45 peut être en communication filaire ou non filaire avec une interface homme-machine d'entrée 31 et/ou une interface homme-machine de sortie 32. Ces interfaces 31,32 peuvent constituer une seule et même interface. Par exemple, un bouton à deux positions représente l'interface homme-machine d'entrée 31 lorsque le bouton est dans une première position et l'interface homme-machine de sortie 32 lorsque le bouton est dans une deuxième position.

La figure 2 illustre le procédé de simulation de l'invention, ce procédé pouvant être mis en œuvre par le giravion d'entraînement 1 de la figure 1 par exemple.

En vol, le régulateur 45 pilote le moteur à combustion d'entraînement 10, via le doseur 47, afin que le rotor de sustentation d'entraînement 5 tourne à une vitesse nominale de rotation. Le régulateur 45 est configuré pour piloter le doseur 47 en appliquant une loi de pilotage prenant la forme d'une loi nominale, et en prenant soin que le paramètre de couple ne dépasse pas la limite de régulation. La limite de régulation est alors égale à une valeur nominale.

Le procédé comporte dès lors l'activation STP1 de la phase d'entraînement PTRAIN par la manœuvre de l'interface homme-machine d'entrée 31. Cette interface homme-machine d'entrée 31 transmet un signal, analogique ou numérique, au régulateur 45. Ce signal est porteur d'un ordre d'initier la phase d'entraînement PTRAIN.

En réponse à cette activation STP1, le procédé de simulation comporte une affectation STP2 d'une valeur d'entraînement mémorisée à la limite de régulation. Le régulateur 45 est configuré pour que la limite de régulation devienne égale à la valeur d'entraînement et non plus à la valeur nominale. La valeur d'entraînement est inférieure à cette valeur nominale.

Le procédé de simulation comporte alors la régulation STP3 du moteur à combustion d'entraînement 10 en maintenant le paramètre de couple du giravion d'entraînement 1 inférieur ou égal à la nouvelle valeur de la limite de régulation, à savoir la valeur d'entraînement.

Le régulateur 45 peut notamment piloter le moteur à combustion d'entraînement 10 en le plaçant dans un régime différent du régime de ralenti, de manière à développer une puissance supérieure à une puissance atteinte lors d'un régime de ralenti.

En particulier, cette étape de régulation STP3 du moteur à combustion d'entraînement 10 peut comporter une régulation STP32 du moteur à combustion d'entraînement 10 en affectant à la loi de pilotage non plus la loi nominale, mais une loi de régulation dédiée à la phase d'entraînement PTRAIN, et une inhibition STP33 de cette loi de régulation dédiée tant que le paramètre de couple est supérieur ou égal à la valeur d'entraînement.

Tant que le paramètre de couple est inférieur à la valeur d'entraînement, le régulateur 45 peut utiliser la loi de régulation dédiée pour déterminer la position du doseur 47 de carburant à atteindre. Cette loi de régulation dédiée peut être similaire voire identique à la loi régulant le moteur électrique simulé 92. Lorsque le paramètre de couple est supérieur ou égal à la valeur d'entraînement, le régulateur 45 peut fermer le doseur 47, aucun débit de carburant n'alimentant alors le moteur à combustion d'entraînement 10.

Ainsi, à l'activation de la phase d'entraînement STP1, la limite de régulation est subitement réduite de manière importante. Le paramètre de couple devient supérieur à la limite de régulation qui est maintenant égale à la valeur d'entraînement, ce qui induit une fermeture du doseur 47 de carburant. La puissance développée par le moteur à combustion d'entraînement 10 baisse subitement ce qui induit une baisse de la vitesse de rotation du rotor de sustentation d'entraînement 5. Quand le paramètre de couple atteint la valeur d'entraînement, le moteur à combustion d'entraînement 10 est ensuite régulé par le régulateur 45 d'une manière sensiblement équivalente au moteur électrique simulé 92.

Par suite, ce procédé permet de simuler le comportement du giravion simulé 90 avec un giravion d'entraînement 1 qui peut pourtant être dépourvu, ou non, de moteur électrique.

En parallèle ou à la suite, le procédé peut, le cas échéant, comporter un remplacement STPR de la valeur nominale par la valeur d'entraînement au sein de l'instrument 70. Le procédé de simulation comporte alors une détermination STPC, avec l'instrument 70, de la limite de fonctionnement en utilisant une nouvelle valeur de limite pour le paramètre de couple lors de l'application de la loi d'affichage mémorisée. Durant une étape STPAFF, le procédé comporte un affichage de la limite de fonctionnement calculée en prenant en compte non pas la valeur nominale affectée initialement au paramètre de couple, mais la valeur d'entraînement.

En parallèle ou à la suite, le procédé peut, le cas échéant, comporter un affichage STPINFO d'au moins une information sur l'afficheur 75.

Une telle information peut être une indication ACT d'action à réaliser sur un pas collectif de pales 6 du rotor de sustentation d'entraînement 5. Par exemple, le régulateur peut transmettre un signal à l'afficheur 75 pour : requérir l'affichage d'un symbole indiquant que le pas collectif doit être augmenté si la vitesse de rotation courante du rotor de sustentation d'entraînement 5 est supérieure à un seuil haut, d'un symbole indiquant que le pas collectif doit être baissé si la vitesse de rotation courante du rotor de sustentation d'entraînement 5 est inférieure à un seuil bas, le seuil bas étant inférieur au seuil haut, d'un symbole indiquant que le pas collectif doit être maintenu si la vitesse de rotation courante du rotor de sustentation d'entraînement est comprise entre le seuil bas inclus et le seuil haut inclus.

Une telle information peut être une vitesse de rotation courante NRCUR du rotor de sustentation d'entraînement 5 mesurée avec le senseur de vitesse et transmise directement ou via le régulateur 45.

Une telle information peut être un objectif NR* de vitesse de rotation dudit rotor de sustentation d'entraînement 5 établi ou mémorisé par le régulateur 45.

Une telle information peut être un état de charge 86 simulé d'une batterie électrique simulée 94, cet état de charge 86 étant calculé par le régulateur 45 en fonction d'une durée de fonctionnement du moteur à combustion d'entraînement 10 et des valeurs successives du paramètre de couple pendant cette durée de fonctionnement.

Une telle information peut être illustrée par un symbole TRAIN signalant la mise en œuvre de la phase d'entraînement PTRAIN, l'interface homme-machine d'entrée 31 ou le régulateur 45 transmettant à l'afficheur 75 un signal, analogique ou numérique, porteur de cette information.

Par ailleurs, le procédé peut comporter une étape de test pour évaluer si la phase d'entraînement doit être interrompue et si une sortie STPEXIT de cette phase d'entraînement doit être entreprise. Ainsi, la sortie STPEXIT de la phase d'entraînement peut être initiée par le régulateur 45 en présence :
- d'une manœuvre STPCOM de l'interface homme-machine de sortie 32, cette interface homme-machine de sortie 32 envoyant un signal, analogique ou numérique, au régulateur 45 porteur de l'arrêt requis,
- lorsque le régulateur 45 détermine (STPCOND1) que la vitesse de rotation du rotor de sustentation d'entraînement 5 est inférieure à un premier seuil de vitesse prédéterminé, voire mémorisé dans le régulateur 45, et que conjointement une hauteur du giravion d'entraînement 1 est supérieure à un seuil de hauteur prédéterminé, voire mémorisé dans le régulateur 45, ou
- lorsque le régulateur 45 détermine (STPCOND2) que la vitesse de rotation du rotor de sustentation d'entraînement 5 est inférieure à un deuxième seuil de vitesse et que conjointement la hauteur du giravion d'entraînement 1 est inférieure ou égale au seuil de hauteur, le premier seuil de vitesse étant supérieur au deuxième seuil de vitesse.

A l'issue de la phase de sortie, le régulateur 45 affecte à la limite de régulation la valeur nominale à l'issue d'une période de transition et peut appliquer la loi nominale appliquée avant la phase d'entraînement.

Par contre, durant une période transitoire, l'étape de sortie STPEXIT peut comprendre l'affectation STPTRANS à la limite de régulation d'une valeur qui augmente selon une loi de transition prédéterminée de la valeur d'entraînement à la valeur nominale. La loi de régulation dédiée à la phase d'entraînement, la loi de régulation nominale utilisée avant ou après la phase d'entraînement ou une autre loi peut être appliquée par le régulateur 45, tout en limitant la puissance développée par le moteur à combustion d'entraînement 10 en maintenant le paramètre de couple inférieur ou égale à la limite de régulation.

Naturellement, la présente invention est sujette à de nombreuses variations. Il est bien sûr envisageable de remplacer un moyen décrit par un moyen équivalent sans sortir du cadre de la présente invention comme définit dans le jeu des revendications.

## Revendications

1. Procédé de simulation d'une phase d'autorotation pouvant survenir sur un giravion simulé (90) comportant un unique moteur à combustion simulé (91) pour mettre en rotation un rotor de sustentation simulé (93) hors cas de panne et un moteur électrique simulé (92) pour mettre en rotation ledit rotor de sustentation simulé (93) lors de ladite phase d'autorotation,
le procédé comportant une phase d'entraînement (PTRAIN) réalisée avec un giravion d'entraînement (1), le giravion d'entraînement (1) comportant un unique moteur à combustion d'entraînement (10) pour mettre en rotation un rotor de sustentation d'entraînement (5), **caractérisé en ce que**
le moteur à combustion d'entraînement (10) est régulé par un régulateur (45) d'un système de pilotage (30) en maintenant un paramètre de couple du giravion d'entraînement (1) inférieur ou égal à une limite de régulation, et **en ce que** la phase d'entraînement (PTRAIN) comprend :
- activation (STP1) de la phase d'entraînement (PTRAIN) par la manoeuvre d'une interface homme-machine d'entrée (31) du système de pilotage (30),
- en réponse à ladite activation (STP1), affectation (STP2) par le régulateur (45) à la limite de régulation d'une valeur d'entraînement mémorisée et régulation (STP3) du moteur à combustion d'entraînement par le régulateur (45) en maintenant le paramètre de couple du giravion d'entraînement (1) inférieur ou égal à la limite de régulation, ladite valeur d'entraînement étant inférieure à une valeur nominale affectée à la limite de régulation avant ladite activation, pour que le moteur à combustion d'entraînement (10) développe une puissance égale à une puissance de référence développée par le moteur électrique simulé (92) lors d'une phase d'autorotation au sein du giravion simulé (90).

2. Procédé selon la revendication 1,
**caractérisé en ce que** le paramètre de couple est une puissance motrice ou un couple moteur transmis à un élément du giravion d'entraînement.

3. Procédé selon l'une quelconque des revendications 1 à 2,
**caractérisé en ce que** le giravion d'entraînement (1) comporte un moteur électrique d'entraînement (20) apte à mettre en rotation ledit rotor de sustentation d'entraînement (5) et non utilisé durant la phase d'entraînement (PTRAIN) ou comporte uniquement le moteur à combustion d'entraînement (10) pour mettre en mouvement le rotor de sustentation d'entraînement (5).

4. Procédé selon l'une quelconque des revendications 1 à 3,
**caractérisé en ce que** ladite régulation (STP3) dudit moteur à combustion d'entraînement (10) comporte une régulation (STP32) du moteur à combustion d'entraînement (10) en appliquant une loi de régulation dédiée à la phase d'entraînement (PTRAIN), et une inhibition (STP33) de cette loi de régulation tant que le paramètre de couple est supérieur ou égal à la valeur d'entraînement.

5. Procédé selon l'une quelconque des revendications 1 à 4,
**caractérisé en ce que** ledit giravion d'entraînement (1) comprenant un instrument (70) du système de pilotage (30) affichant une limite de fonctionnement (71) déterminée, hors phase d'entrainement, par une loi d'affichage en fonction de la valeur nominale ; la phase d'entraînement (PTRAIN) comportant un remplacement (STPR) de la valeur nominale par la valeur d'entraînement pour déterminer la limite de fonctionnement.

6. Procédé selon l'une quelconque des revendications 1 à 5, **caractérisé en ce que** ladite régulation (STP3) dudit moteur à combustion d'entraînement (10) comporte un maintien d'une puissance courante développée par le moteur à combustion d'entraînement (10) supérieure à une puissance atteinte lors d'un régime de ralenti.

7. Procédé selon l'une quelconque des revendications 1 à 6,
**caractérisé en ce que** la phase d'entraînement (PTRAIN) comporte un affichage (STPINFO) d'au moins une information suivante : une indication (ACT) d'une action à réaliser sur un pas collectif de pales (6) du rotor de sustentation d'entraînement (5) ; une vitesse de rotation courante (NRCUR) dudit rotor de sustentation d'entraînement (5) ; un objectif (NR*) de vitesse de rotation dudit rotor de sustentation d'entraînement (5) ; un état de charge (86) simulé, en fonction d'une durée de fonctionnement du moteur à combustion d'entraînement (10) et de valeurs successives dudit paramètre de couple pendant ladite durée de fonctionnement durant la phase d'entraînement (PTRAIN), d'une batterie électrique simulée (94) alimentant électriquement le moteur électrique simulé (92) ; un symbole (TRAIN) illustrant la mise en œuvre de la phase d'entraînement (PTRAIN).

8. Procédé selon l'une quelconque des revendications 1 à 7,
**caractérisé en ce que** le procédé comprend une sortie (STPEXIT) de la phase d'entraînement (PTRAIN), ladite limite de régulation étant égale à la valeur nominale à l'issue de ladite sortie.

9. Procédé selon la revendication 8,
**caractérisé en ce que** ledit procédé comporte une manœuvre (STPCOM) d'une interface homme-machine de sortie (32) du système de pilotage, ladite sortie (STPEXIT) étant réalisée en réponse à ladite manœuvre de l'interface homme-machine de sortie.

10. Procédé selon l'une quelconque des revendications 8 à 9, **caractérisé en ce que** ladite sortie (STPEXIT) est engagée automatiquement :
- lorsqu'une vitesse de rotation du rotor de sustentation d'entraînement (5) est inférieure ou égale à un premier seuil de vitesse et conjointement une hauteur du giravion d'entraînement (1) est supérieure à un seuil de hauteur, ou
- lorsque la vitesse de rotation du rotor de sustentation d'entraînement (5) est inférieure à un deuxième seuil de vitesse et conjointement la hauteur du giravion d'entraînement (1) est inférieure ou égale au seuil de hauteur, le premier seuil de vitesse étant supérieur au deuxième seuil de vitesse.

11. Procédé selon l'une quelconque des revendications 8 à 10,
**caractérisé en ce que** ladite sortie (STPEXIT) comprend une affectation (STPTRANS) à la limite de régulation d'une valeur qui augmente selon une loi de transition prédéterminée de la valeur d'entraînement à la valeur nominale durant une phase de transition.

12. Giravion d'entraînement (1) pour entraîner un pilote à entrer dans une phase en autorotation pouvant survenir suite à une panne moteur au sein d'un giravion simulé (90), le giravion d'entraînement (1) comportant un unique moteur à combustion d'entraînement (10) pour mettre en rotation un rotor de sustentation d'entraînement (5),
**caractérisé en ce que** ledit giravion d'entraînement (1) comporte un système de pilotage (30) configuré pour mettre en œuvre le procédé selon l'une quelconque des revendications 1 à 11.

## Patentansprüche

1. Verfahren zur Simulation einer Autorotationsphase, die bei einem simulierten Drehflügler (90) auftreten kann, der einen einzigen simulierten Verbrennungsmotor (91) zum Antreiben eines simulierten Hubrotors (93) im Normalfall und einen simulierten Elektromotor (92) zum Antreiben des simulierten Hubrotors (93) während der Autorotationsphase aufweist,
wobei das Verfahren eine Trainingsphase (PTRAIN) umfasst, die mit einem Trainingsdrehflügler (1) durchgeführt wird, wobei der Trainingsdrehflügler (1) einen einzigen Trainingsverbrennungsmotor (10) zum Drehen eines Trainingshubrotors (5) umfasst, **dadurch gekennzeichnet, dass**
der Trainingsverbrennungsmotor (10) durch einen Regler (45) eines Steuerungssystems (30) geregelt wird, indem ein Drehmomentparameter des Trainingsdrehflüglers (1) unterhalb oder gleich eines Regelungsgrenzwerts gehalten wird,
und dass die Trainingsphase (PTRAIN)
- das Aktivieren (STP1) der Trainingsphase (PTRAIN) durch Betätigung einer Mensch-Maschine-Schnittstelle (31) des Steuerungssystems (30),
- als Reaktion auf das Aktivieren (STP1) das Zuweisen (STP2) eines gespeicherten Trainingswerts durch den Regler (45) als Regelungsgrenzwert und das Regeln (STP3) des Trainingsverbrennungsmotors durch den Regler (45) umfasst, wobei der Drehmomentparameter des Trainingsdrehflüglers (1) unterhalb oder gleich dem Regelungsgrenzwert gehalten wird, wobei der Trainingswert niedriger ist als ein vor der Aktivierung des Regelungsgrenzwerts zugewiesener Nennwert, damit der Trainingsverbrennungsmotor (10) eine Leistung entwickelt, die einer vom simulierten Elektromotor (92) während einer Autorotationsphase im simulierten Drehflügler (90) entwickelten Referenzleistung entspricht.

2. Verfahren nach Anspruch 1,
**dadurch gekennzeichnet, dass** der Drehmomentparameter eine Trainingsleistung oder ein Trainingsdrehmoment ist, das auf ein Element des Trainingsdrehflüglers übertragen wird.

3. Verfahren nach einem der Ansprüche 1 bis 2,
**dadurch gekennzeichnet, dass** der Trainingsdrehflügler (1) einen elektrischen Trainingsmotor (20) umfasst, der in der Lage ist, den Trainingshubrotor (5) in Drehung zu versetzen, und der während der Trainingsphase (PTRAIN) nicht verwendet wird, oder nur den Trainingsverbrennungsmotor (10) umfasst, um den Trainingshubrotor (5) in Bewegung zu versetzen.

4. Verfahren nach einem der Ansprüche 1 bis 3,
**dadurch gekennzeichnet, dass** das Regeln (STP3) des Trainingsverbrennungsmotors (10) ein Regeln (STP32) des Trainingsverbrennungsmotors (10) durch Anwendung eines für die Trainingsphase (PTRAIN) bestimmten Regelgesetzes und ein Sperren (STP33) dieses Regelgesetzes, solange der Drehmomentparameter größer oder gleich dem Antriebswert ist, umfasst.

5. Verfahren nach einem der Ansprüche 1 bis 4,
**dadurch gekennzeichnet, dass** der Trainingsdrehflügler (1) ein Instrument (70) des Steuerungssystems (30) umfasst, das einen Betriebsgrenzwert (71) anzeigt, der außerhalb der Trainingsphase durch eine Anzeigeregel in Abhängigkeit vom Nennwert bestimmt wird; und dass die Trainingsphase (PTRAIN) ein Ersetzen (STPR) des Nennwerts durch den Trainingswert umfasst, um den Betriebsgrenzwert zu bestimmen.

6. Verfahren nach einem der Ansprüche 1 bis 5,
**dadurch gekennzeichnet, dass** das Regeln (STP3) des Trainingsverbrennungsmotors (10) ein Aufrechterhalten einer vom Trainingsverbrennungsmotor (10) entwickelten laufenden Leistung umfasst, die über einer im Leerlauf erreichten Leistung liegt.

7. Verfahren nach einem der Ansprüche 1 bis 6,
**dadurch gekennzeichnet, dass** die Trainingsphase (PTRAIN) ein Anzeigen (STPINFO) mindestens einer der folgenden Informationen umfasst: eine Angabe (ACT) einer auszuführenden Aktion an einer kollektiven Steigung der Blätter (6) des Trainingshubrotors (5); eine aktuelle Drehzahl (NRCUR) des Trainingshubrotors (5); eine Zieldrehzahl (NR*) des Trainingshubrotors (5); einen in Abhängigkeit von einer Betriebsdauer des Trainingsverbrennungsmotors (10) und aufeinanderfolgenden Werten des Drehmomentparameters während der Betriebsdauer während der Trainingsphase (PTRAIN) simulierten Ladezustand (86) einer simulierten elektrischen Batterie (94), die den simulierten Elektromotor (92) mit Strom versorgt; ein Symbol (TRAIN), das die Durchführung der Trainingsphase (PTRAIN) veranschaulicht.

8. Verfahren nach einem der Ansprüche 1 bis 7,
**dadurch gekennzeichnet, dass** das Verfahren eine Ausgabe (STPEXIT) der Trainingsphase (PTRAIN) umfasst, wobei der Regelungsgrenzwert am Ende des genannten Ausgangs dem Nennwert entspricht.

9. Verfahren nach Anspruch 8,
**dadurch gekennzeichnet, dass** das Verfahren ein Betätigen (STPCOM) einer Mensch-Maschine-Schnittstelle (32) des Steuerungssystems umfasst, wobei die Ausgabe (STPEXIT) als Reaktion auf die Betätigung der Mensch-Maschine-Schnittstelle vorgenommen wird.

10. Verfahren nach einem der Ansprüche 8 bis 9,
**dadurch gekennzeichnet, dass** die Ausgabe (STPEXIT) automatisch ausgelöst wird:
- wenn eine Drehzahl des Trainingshubrotors (5) kleiner oder gleich einem ersten Drehzahlschwellenwert ist und gleichzeitig eine Höhe des Trainingsdrehflüglers (1) größer als ein Höhenschwellenwert ist, oder
- wenn die Drehzahl des Trainingshubrotors (5) unter einem zweiten Drehzahlschwellenwert liegt und gleichzeitig die Höhe des Trainingsdrehflüglers (1) unter oder gleich dem Höhenschwellenwert ist, wobei der erste Drehzahlschwellenwert höher ist als der zweite Drehzahlschwellenwert.

11. Verfahren nach einem der Ansprüche 8 bis 10,
**dadurch gekennzeichnet, dass** die Ausgabe (STPEXIT) ein Zuweisen (STPTRANS) eines Wertes an den Regelungsgrenzwert umfasst, der während einer Übergangsphase gemäß einer vorgegebenen Übergangsregel vom Trainingswert zum Nennwert ansteigt.

12. Trainingsdrehflügler (1) zum Trainieren eines Piloten für den Eintritt in eine Autorotationsphase, die nach einem Triebwerksausfall in einem simulierten Drehflügler (90) eintreten kann, wobei der Trainingsdrehflügler (1) einen einzigen Antriebsverbrennungsmotor (10) zum Drehen eines Antriebshubrotors (5) umfasst,
**dadurch gekennzeichnet, dass** der Trainingsdrehflügler (1) ein Steuerungssystem (30) umfasst, das konfiguriert ist, um das Verfahren gemäß einem der Ansprüche 1 bis 11 auszuführen.

## Claims

1. Method for simulating an autorotation phase being able to occur on a simulated rotorcraft (90) comprising one single simulated combustion engine (91) to rotate a simulated lift rotor (93) excluding case of breakdown and a simulated electric engine (92) to rotate said simulated lift rotor (93) during said autorotation phase,
the method comprising a training phase (PTRAIN) performed with a training rotorcraft (1), the training rotorcraft (1) comprising one single training combustion engine (10) to rotate a training lift rotor (5), **characterised in that** the training combustion engine (10) is regulated by a regulator (45) of a piloting system (30) by maintaining a torque parameter of the training rotorcraft (1) less than or equal to a regulation limit, and **in that** the training phase (PTRAIN) comprises:
- activation (STP1) of the training phase (PTRAIN) by manoeuvring an input human-machine interface (31) of the piloting system (30),
- in response to said activation (STP1), assignment (STP2) by the regulator (45) to the regulation limit of a memorised training value and regulation (STP3) of the training combustion engine by the regulator (45) by maintaining the torque parameter of the training rotorcraft (1) less than or equal to the regulation limit, said training value being less than a nominal value assigned to the regulation limit before said activation, such that the training combustion engine (10) develops a power equal to a reference power developed by the simulated electric engine (92) during an autorotation phase within the simulated rotorcraft (90).

2. Method according to claim 1,
**characterised in that** the torque parameter is an engine power or an engine torque transmitted to an element of the training rotorcraft.

3. Method according to any one of claims 1 to 2,
**characterised in that** the training rotorcraft (1) comprises a training electric engine (20) capable of rotating said training lift rotor (5) and not used during the training phase (PTRAIN) or comprises only the training combustion engine (10) to set the training lift rotor (5) in motion.

4. Method according to any one of claims 1 to 3,
**characterised in that** said regulation (STP3) of said training combustion engine (10) comprises a regulation (STP32) of the training combustion engine (10) by applying a dedicated regulation law to the training phase (PTRAIN), and an inhibition (STP33) of this regulation law, as the torque parameter is greater than or equal to the training value.

5. Method according to any one of claims 1 to 4,
**characterised in that** said training rotorcraft (1) comprising an instrument (70) of the piloting system (30) displaying a determined operating limit (71), during the training phase, by a display law as a function of the nominal value; the training phase (PTRAIN) comprising a replacement (STPR) of the nominal value with the training value to determine the operating limit.

6. Method according to any one of claims 1 to 5,
**characterised in that** said regulation (STP3) of said training combustion engine (10) comprises a maintaining of a current power developed by the training combustion engine (10) greater than an expected power during an idle speed.

7. Method according to any one of claims 1 to 6,
**characterised in that** the training phase (PTRAIN) comprises a display (STPINFO) of at least one following piece of information: an indication (ACT) of an action to be performed on a blade collective pitch (6) of the training lift rotor (5); a current rotation speed (NRCUR) of said training lift rotor (5); a rotation speed objective (NR*) of said training lift rotor (5); a simulated charge state (86), as a function of an operating duration of the training combustion engine (10) and of successive values of said torque parameter during said operating duration during the training phase (PTRAIN), of a simulated electric battery (94), electrically powering the simulated electric engine (92); a symbol (TRAIN) illustrating the implementation of the training phase (PTRAIN).

8. Method according to any one of claims 1 to 7,
**characterised in that** the method comprises an exit (STPEXIT) from the training phase (PTRAIN), said regulation limit being equal to the nominal value from said exit.

9. Method according to claim 8,
**characterised in that** said method comprises a manoeuvre (STPCOM) of an exit human-machine interface (32) of the piloting system, said exit (STPEXIT) being performed in response to said manoeuvre of the exit human-machine interface.

10. Method according to any one of claims 8 to 9,
**characterised in that** said exit (STPEXIT) is engaged automatically:
- when a rotation speed of the training lift rotor (5) is less than or equal to a first speed threshold and simultaneously, a height of the training rotorcraft (1) is greater than a height threshold, or
- when the rotation speed of the training lift rotor (5) is less than a second speed threshold and simultaneously, the height of the training rotorcraft (1) is less than or equal to the height threshold, the first speed threshold being greater than the second speed threshold.

11. Method according to any one of claims 8 to 10,
**characterised in that** said exit (STPEXIT) comprises an assignment (STPTRANS) to the regulation limit of a value which increases according to a predetermined transition law from the training value to the nominal value during a transition phase.

12. Training rotorcraft (1) to train a pilot to enter into a phase in autorotation being able to occur following an engine breakdown within a simulated rotorcraft (90), the training rotorcraft (1) comprising one single training combustion engine (10) to set a training lift rotor (5) in motion,
**characterised in that** said training rotorcraft (1) comprises a piloting system (30) configured to implement the method according to any one of claims 1 to 11.
